Europäisches Patentamt

European Patent Office

Office européen des brevets

(11) Publication number: **0 592 672 A1**

# EUROPEAN PATENT APPLICATION
## published in accordance with Art. 158(3) EPC

(21) Application number: 92915835.0

(22) Date of filing: 15.07.92

(86) International application number:
PCT/JP92/00902

(87) International publication number:
WO 93/22777 (11.11.93 93/27)

(51) Int. Cl.⁵: **H01F 1/11, H01F 41/02**

(30) Priority: **24.04.92 JP 131649/92**
**29.05.92 JP 164379/92**
**05.06.92 JP 172069/92**

(43) Date of publication of application:
**20.04.94 Bulletin 94/16**

(84) Designated Contracting States:
**DE FR GB NL**

(71) Applicant: **TDK CORPORATION**
**13-1, Nihonbashi 1-chome**
**Chuo-ku, Tokyo 103(JP)**

(72) Inventor: **TAGUCHI, Hitoshi TDK Corporation**
**13-1, Nihonbashi 1-chome**
**Chuo-ku Tokyo 103(JP)**
Inventor: **HIRATA, Fumihiko TDK Corporation**
**13-1, Nihonbashi 1-chome**
**Chuo-ku Tokyo 103(JP)**
Inventor: **TAKEISHI, Taku TDK Corporation**
**13-1, Nihonbashi 1-chome**
**Chuo-ku Tokyo 103(JP)**
Inventor: **MORI, Teruo TDK Corporation**
**13-1, Nihonbashi 1-chome**
**Chuo-ku Tokyo 103(JP)**

(74) Representative: **Vogeser, Werner, Dipl.-Ing. et al**
**Patent- und Rechtsanwälte,**
**Hansmann Vogeser Dr. Boecker Alber Dr. Strych,**
**Albert-Rosshaupter-Strasse 65**
**D-81369 München (DE)**

(54) METHOD OF PRODUCING ANISOTROPIC FERRITE MAGNET, ANISOTROPIC FERRITE MAGNET, HEXAGONAL FERRITE PARTICLES, AND METHOD FOR PRODUCING THEM.

(57) A slurry containing ferrite particles and an organic solvent is wet molded in a magnetic field while removing the organic solvent, to obtain a molded article. This molded article is sintered to provide an anisotropic ferrite magnet. In this case, a surfactant is added to the slurry during wet molding. In addition to the surfactant or in place thereof, the ferrite particles are pulverized so as to impart at least $1 \times 10^{-4}$ of strain of a (206) plane measured by X-ray diffraction, and to reduce iHc preferably below 3.5 kOe. In these ways, orientation of the molded article can be drastically improved, and extremely high magnetic characteristics can be obtained.

FIG. 4

CALCINED POWDERS

DRY BALL MILL

DRY VIBRATION MILL
+ STEARIC ACID

BALL MILL
+ WATER

BALL MILL+
TOLUENE

BALL MILL+
STEARIC ACID
+ TOLUENE

BALL MILL+
TOLUENE

BALL MILL
+ WATER

BALL MILL+
STEARIC ACID
+ TOLUENE

| COMP. EX. 1 | COMP. EX. 2 | EX. 2 | EX. 1 | COMP. EX. 3 |
|---|---|---|---|---|

EX. 3

BACKGROUND OF THE INVENTION

TECHNICAL FIELD

The present invention relates to hexagonal system ferrite particles and their production process as well as an anisotropic ferrite magnet and its production process.

BACKGROUND TECHNIQUE

Currently available oxide permanent magnet materials, for the most part, are Sr ferrites based on an M type hexagonal or other systems or, possibly, Ba ferrites, and their sintered or bonded magnets are produced. In order to increase the residual magnetic flux density, Br, of the properties of a magnet, it is important to increase its density and make it anisotropic by magnetic field pressing. In order to enhance another magnet property, say, a coercive force, Hc, it is important to reduce ferrite particles to 1 $\mu$m or less in size, thereby forming single domain particles.

So far, sintered magnets of Ba or Sr ferrites have been produced in the following manners. That is to say, iron oxide is mixed with the carbonate of Ba or Sr, and the mixture is then calcined for the completion of its ferritic reaction. After that, the calcined product is pulverized, compacted in a magnetic field and sintered. In order to increase the Hc of a magnet, it is required to provide for ferrite particles of 1 $\mu$m or less for compacting them in a magnetic field in consideration of grain growth at the time of sintering. To this end, two ways are available, one in which particles of a few $\mu$m or more are reduced to 1 $\mu$m or less after calcination and the other in which ferrite particles are synthesized such that they have already been reduced to 1 $\mu$m or less before pulverization.

Pulverization or the compaction of powders in a magnetic field may be achieved in two ways, say, a dry way and a wet way using a solvent. The wet procedure makes it easier to reduce ferrite particles to 1 $\mu$m or less when compared with the dry procedure, and is favorable for enhancing the performance of a magnet as well, because of its excellent degree of orientation during the compaction in a magnetic field. For such wet pulverization, water has conventionally been used as the solvent.

On the other hand, increasing the proportion of single-domain particles may be achieved by co-precipitation, hydrothermal synthesis or conventional ways in which fine materials are mixed together with high accuracy and the mixture is then calcined at a relatively low temperature at which no grain growth occurs. These procedures make it possible to obtain fine ferrite particles lying in the range of 0.01 to 1 $\mu$m, thus allowing these particles to have a very high iHc (a high of about 6 kOe).

It is considered necessary to use such fine particles so as to increase the performance of an oxide permanent magnet, but never until now is there any report about anisotropic magnets using them and oriented in a magnetic field. Nor are they practically used.

This reason is that when an anisotropic magnet is produced with such fine particles, its iHc is increased, but its Br degrades so that no effect is obtained on improving its magnetic characteristics. And the reason for this Br degradation believes chiefly in the deterioration of the degree of orientation during the compaction in a magnetic field.

One reason for the degradation of the degree of orientation is that as the sizes of ferrite particles become smaller than required, for instance, are of the order of 0.1 $\mu$m or less and the magnitude of magnetization ($\sigma$s) is reduced as well, the rotational torques of the particles in a magnetic field are diminished. Another reason is that as the coercive forces (bHc) of the particles are increased as will be described later, they are likely to agglomerate together magnetically.

So far, the iHc of an M type Ba ferrite powder of 0.1 to 0.3 $\mu$m, for instance, has reached a high of 4650 Oe, as set forth in the examples disclosed in JP-B 62-53443, but the $\sigma$s is as low as 44 emu/g. Likewise, JP-B 49-38917 refers to powders of 1 $\mu$m or less having an iHc value as high as 4250 Oe, but makes only a mention of rubber magnet production.

DISCLOSURE OF THE INVENTION

A primary object of this invention is to eliminate the problems associated with the conventional magnets mentioned above by the provision of an anisotropic ferrite magnet much more improved in terms of performance than ever before and its production process as well as hexagonal system ferrite particles that are the raw material therefor and their production process.

These and other objects are achieved by the present invention which is defined from (1) to (3) below.

3

(1) A process for producing an anisotropic ferrite magnet by compacting a slurry containing particles of the raw material for said ferrite magnet and an organic solvent in a magnetic field while removing said organic solvent to obtain a compact and sintering said compact, wherein:

a surface active agent is allowed to exist in said slurry, thereby improving the degree of orientation of said compact.

(2) A process for producing an anisotropic ferrite magnet as recited in (1), wherein said slurry is obtained by the wet pulverization of a slurry containing the starting powders of the particles of the raw material for said ferrite magnet and said organic solvent.

(3) A process for an anisotropic ferrite magnet as recited in (1) or (2), wherein the particles of the raw material for said ferrite magnet or their starting powders are prepared by the dry pulverization of the calcined powders.

(4) A process for an anisotropic ferrite magnet as recited in any one of (1)-(3), wherein said slurry is prepared by the wet pulverization of the starting powders of the particles of the raw material for said ferrite magnet and then the substitution of a solvent by said organic solvent.

(5) A process for producing an anisotropic ferrite magnet as recited in any one of (2)-(4), wherein said surface active agent is added to the starting powders of the particles of said ferrite magnet prior to dry or wet pulverization.

(6) A process for producing an anisotropic ferrite magnet as recited in any one of (2)-(5), wherein said slurry is obtained by the dry or wet pulverization of the starting powders of the particles of the raw material for said ferrite magnet and then the addition of said surface active agent or said surface active agent and said organic solvent.

(7) A process for producing an anisotropic ferrite magnet as recited in any one of (1)-(6), wherein the particles of the raw material for said ferrite magnet in said slurry have a mean particle diameter of 1 $\mu$m or less.

(8) A process for producing an anisotropic ferrite magnet as recited in (7), wherein the coefficient of variation of the particle diameters of the particles of the raw material for said ferrite magnet is 80% or less.

(9) A process for producing an anisotropic ferrite magnet as recited in any one of (1)-(8), wherein crystal strains are introduced in the particles of the raw material for said ferrite magnet with the iHc reduced to 3.5 kOe or less.

(10) A process for producing an anisotropic ferrite magnet as recited in any one of (1)-(9), which has a mean grain diameter of 1.0 $\mu$m or less with the coefficient of variation reduced to 80% or less.

(11) A process for producing an anisotropic ferrite magnet as recited in any one of (1)-(10), wherein the degree of orientation expressed in terms of the ratio of saturation magnetization to residual magnetization is 96% or more.

(12) A process for producing an anisotropic ferrite magnet as recited in any one of (1)-(11), wherein the degree of orientation of said compact is 78% or more.

(13) A process for producing an anisotropic ferrite magnet as recited in any one of (1)-(12), wherein said surface active agent contains a metal element added to ferrite.

(14) A process for producing an anisotropic ferrite magnet as recited in any one of (1)-(13), wherein said surface active agent is allowed to exist in an amount of 0.1 to 5% by weight with respect to the particles of the raw material for said ferrite magnet.

(15) A process for producing an anisotropic ferrite magnet as recited in any one of (1)-(14), wherein said surface active agent is adsorbed onto the surfaces of the particles of the raw material for said ferrite magnet in said slurry.

(16) A process for producing an anisotropic ferrite magnet as recited in any one of (1)-(15), wherein said organic solvent has a viscosity of 0.3 to 2 cps at 20°C.

(17) A process for producing an anisotropic ferrite magnet as recited in any one of (1)-(16), wherein said organic solvent has a vapor pressure of 1 to 200 mmHg at 20°C.

(18) A process for producing an anisotropic ferrite magnet as recited in any one of (1)-(17), wherein said organic solvent has a boiling point of 50 to 200°C.

(19) A process for producing an anisotropic ferrite magnet as recited in any one of (1)-(18), wherein during the wet compaction, said slurry contains 70 to 95% by weight of the particles of the raw material for said ferrite magnet.

(20) A process for producing an anisotropic magnet by pulverizing the starting powders of a hexagonal system ferrite to apply mechanical stress to the hexagonal system ferrite particles so that crystal strains are introduced therein to reduce the iHc to 3.5 kOe or less, compacting the particles in a magnetic field to form a compact and sintering said compact.

EP 0 592 672 A1

(21) A process for producing an anisotropic magnet as recited in (20), wherein strain in the (206) plane is $1\times10^{-4}$ or more, as measured by X-rays.

(22) A process for producing an anisotropic ferrite magnet as recited in any one of (20) or (21), wherein said hexagonal system ferrite particles have a mean particle diameter of 1 $\mu$m or less with the coefficient of variation of the particle diameters being 80% or less.

(23) A process for producing an anisotropic ferrite magnet as recited in any one of (20)-(22), which has a mean grain diameter of 1.0 $\mu$m or less with the coefficient of variation being 80% or less.

(24) A process for producing an anisotropic ferrite magnet as recited in any one of (20)-(23), wherein the degree of orientation expressed in terms of the ratio of saturation magnetization to residual magnetization is 93% or more.

(25) A process for producing an anisotropic ferrite magnet as recited in any one of (21)-(24), wherein the degree of orientation of said compact is 70% or more.

(26) A process for producing an anisotropic ferrite magnet as recited in any one of (20)-(25), wherein said pulverization includes wet pulverization.

(27) A process for producing an anisotropic ferrite magnet as recited in (26), wherein said wet pulverization is carried out using an aqueous solvent and with the addition of a high-molecular dispersant, and the pulverized product is wet-compacted in a magnetic field.

(28) A process for producing an anisotropic ferrite magnet as recited in (27), wherein said high-molecular dispersant is of an ammonium polycarboxylate type.

(29) An anisotropic ferrite magnet which has a mean grain diameter of 1.0 $\mu$m or less with the coefficient of variation being 80% or less and in which the degree of orientation expressed in terms of the ratio of saturation magnetization to residual magnetization is 96% or more.

(30) A hexagonal system ferrite particle having uniaxial crystal magnetic anisotropy, wherein strain in the (206) plane is $1\times10^{-4}$ or more, as measured by X-ray diffraction.

(31) A hexagonal system ferrite particle as recited in (30), in which crystal strain is introduced by the pulverization of the raw material.

(32) A hexagonal system ferrite particle as recited in (31), wherein the iHc is reduced by crystal strain.

(33) A hexagonal system ferrite particle as recited in (32), whose iHc is 3.5 kOe or less.

(34) A hexagonal system ferrite particle as recited in any one of (30)-(33), wherein the amount of variation of the iHc with respect to temperature is reduced by crystal strain.

(35) A hexagonal system ferrite particle as recited in (33) which has a mean particle diameter of 1 $\mu$m or less with the coefficient of variation of the particle diameter being 80% or less.

(36) A process for producing hexagonal system ferrite particles by applying stress to the starting powder of hexagonal system ferrite to introduce therein strains of $1\times10^{-4}$ more in the (206) planes, as measured by X-ray diffraction.

(37) A process for producing hexagonal system ferrite particles as recited in (36), wherein said mechanical stress is applied by wet and/or dry pulverization.

THE EFFECT OF THE INVENTION

The present inventor has found out that a surface active agent capable of being adsorbed onto the surfaces of ferrite particles is added to the raw material for ferrite magnets, the ferrite particles are dispersed in an organic solvent to form a slurry and the slurry is wet-compacted in a magnetic field, whereby, even when use is made of fine particles of 1 $\mu$m or less, the degree of orientation of the obtained compact is increasingly improved with some considerable improvements in the magnetic properties of the compact after sintering.

When use is made of previously synthesized powders containing particles of 1 $\mu$m or less in a large proportion, it is preferred that the iHc of the powders is simultaneously reduced by the introduction of strains by pulverization. Alternatively, when ferrite particles of a few $\mu$m or more are used, it is preferred that when a surface active agent capable of being adsorbed onto the surfaces thereof and the ferrite particles are dispersed in an organic solvent, they are simultaneously reduced to 1 $\mu$m or less by pulverization. When the ferrite particles having an iHc value of 3.5 kOe, especially, the M type Sr ferrite particles having the iHc value of 3 kOe or less are dispersed in an organic solvent for the wet compaction in a magnetic field, while the surface active agent is adsorbed thereonto, the degree of orientation expressed in terms of the ratio between residual magnetization and saturation magnetization is increasingly improved to 78% or more, especially, 80% or more in the case of the compact and to 96% or more, especially, 97% or more in the case of the sintered body. In other words, a selective effect on improving the degree of orientation based on the combined use of the organic solvent with the surface active agent for compacting

5

in a magnetic field is synergistically added to the effect on improving the degree of orientation due to the restriction placed by the crystal strains and coercive forces in the compacted powders. In this case, the added surface active agent is unlikely to remain as a non-magnetic portion, because it is easily decomposed and scattered about during sintering. This makes it possible to obtain higher magnet properties than ever before, say, Br of about 4.4 kG and iHc of 4.0 to 4.2 kOe.

So far, treating fine magnetic particles in an organic solvent has been known to be effective as means for dispersing them with high efficiency. For instance, magnetic fluids are produced by adding and adsorbing oleic acid to fine particles of magnetite or the like and then dispersing them in an organic solvent such as kerosene. Similar procedures are applied to fine particles of $\gamma\text{-}Fe_2O_3$ or the like as well for the production of magnetic tapes.

As to the purpose of the high orientation of magnet materials during the wet compaction in a magnetic field, however, never until now is there any report about their investigation. In other words, the present inventors have found for the first time that such procedures are effective for the orientation of magnet materials, esp., fine magnetic particles of 1 $\mu$m or less, in a magnetic field. According to the present invention, it is possible to obtain sintered ferrite magnets having higher magnetic properties than ever before by the high orientation of ferrite particles of 1 $\mu$m or less.

It is noted that the following publications refer to the wet pulverization in an organic solvent and the wet compaction a magnetic field for the production of magnet materials, but they all differ essentially from the present invention.

(1) JP-A 61-114505 publication

This refers to permanent magnets based on rare earth-iron-boron, and discloses the wet pulverization using an organic solvent with a view to preventing the oxidation of the starting powders.

(2) JP-A 61-291901 publication

This refers to the wet pulverization of the rare earth-containing starting permanent magnet material powders using an organic solvent for the purpose of reducing the amount of oxygen in the sintered body.

(3) JP-A 61-236109 publication

This concerns the wet formation of rare earth magnets as well as ferrite magnets using an organic solvent for the purpose of preventing oxidation and reducing the amount of residual carbon. To this end, a solvent having a low solubility in water is selectively used. As a matter of course, no surface active agent is added at all. From such a point-of-view, this itself has no appreciable relation to ferrite magnets; the examples present Nd magnets alone.

(4) JP-A 64-42105 publication

This concerns a ferrite magnet and claims that the raw material is wet-pulverized in water or an organic solvent and then added with stearic acid or its emulsion. The invention set forth therein has been achieved for improving compactibility (compacting yield) and is silent about improving magnet properties, esp., the degree of orientation; the examples refer to the addition of stearic acid in water, followed by pulverization and compaction. In this connection, note that the effect of the present invention is unachievable when the wet compaction is carried out with water instead of the organic solvent, as will be appreciated from the examples to be given later.

It is further noted that even when fine ferrite particles of 1 $\mu$m or less are merely compacted in a magnetic field, the resulting compact is increasingly improved in terms of the degree of orientation and so can be sintered to obtain a magnet having greatly improved magnetic properties, although it is required that they have a proper particle diameter range of 0.1 to 1 $\mu$m, and a large magnetization ($\sigma$s) that is as close to the theoretical value (ca. 71.5 emu/g) as possible and given crystal strains be introduced in them by the pulverization of the raw material for ferrite magnets.

As mentioned above, when use is made of previously synthesized powders particles of 1 $\mu$m or less in a large proportion, the iHc of the powders is simultaneously reduced by the introduction of strains in them by pulverization. Alternatively, ferrite particles of a few $\mu$m or more may simultaneously be reduced to 1 $\mu$m or less by pulverization. When the ferrite particles having an iHc value of 3.5 kOe, esp., the M type Sr ferrite particles having the iHc value of 3 kOe or less and crystal strains introduced in them are dispersed in, for instance, an aqueous slurry for the wet compaction in a magnetic field, the degree of orientation expressed in terms of the ratio between residual magnetization and saturation magnetization is increasingly improved; it reaches as high as 74% in the case of the compact and as high as 94% in the case of the sintered compact. In other words, an extremely remarkable effect on improving the degree of orientation is achieved by restrictions placed on the crystal strains and coercive forces of the compacted powders. This makes it possible to obtain higher magnet properties than ever before, say, Br of about 4.2 kG and iHc of about 4.2 kOe.

BRIEF DESCRIPTION OF THE DRAWINGS

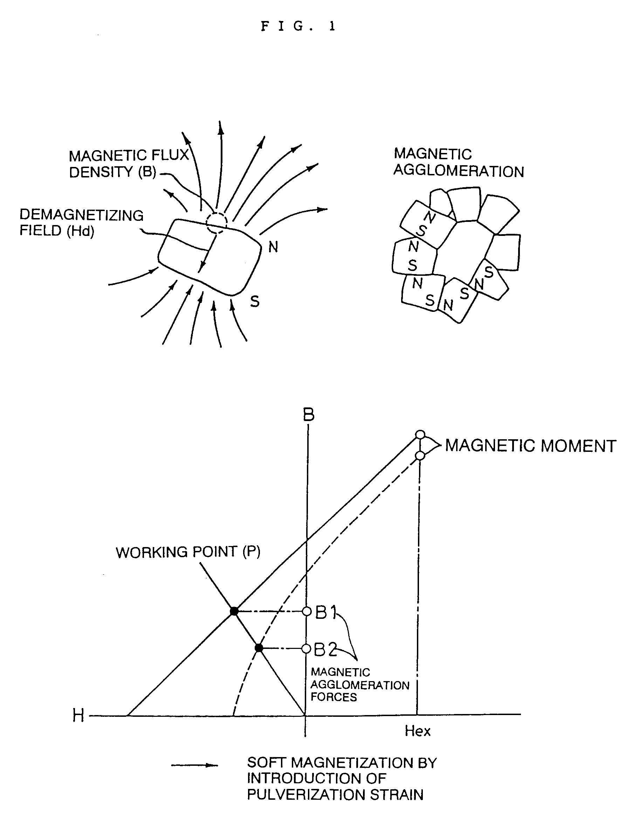

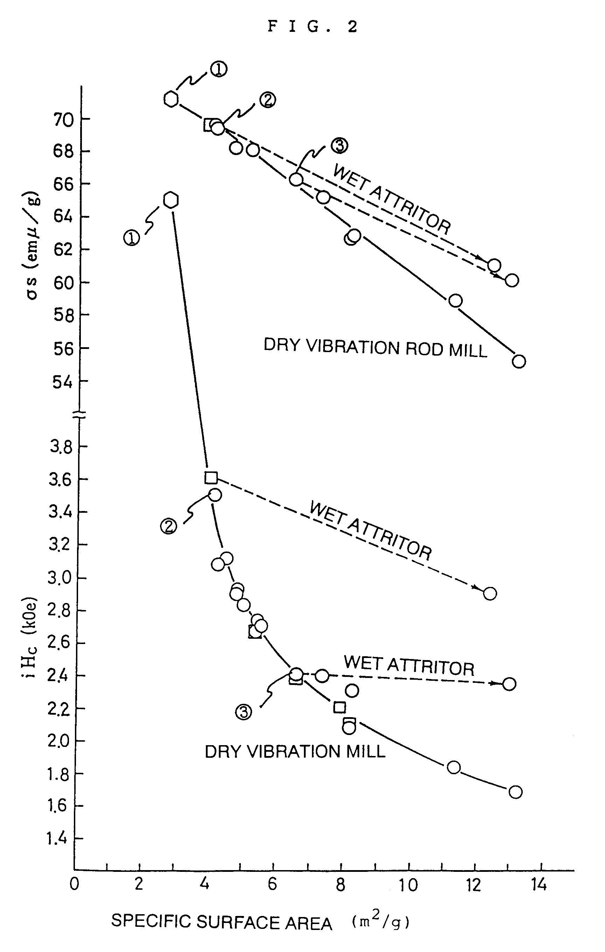

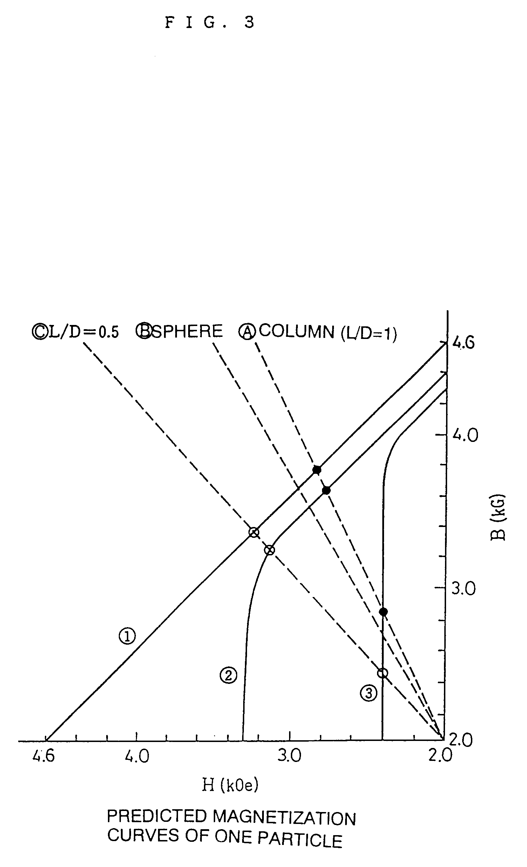

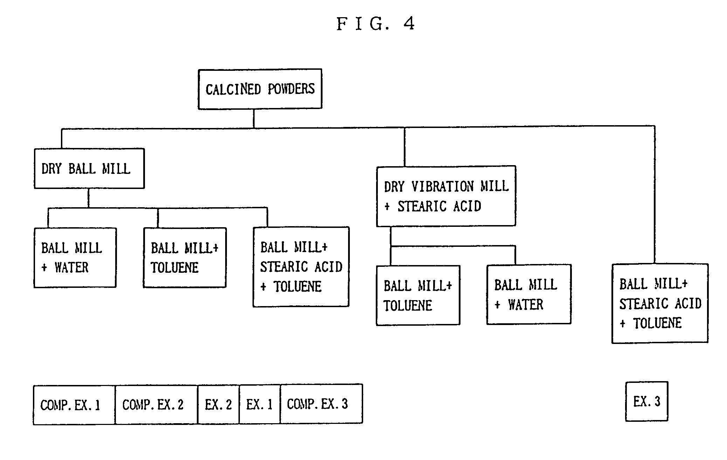

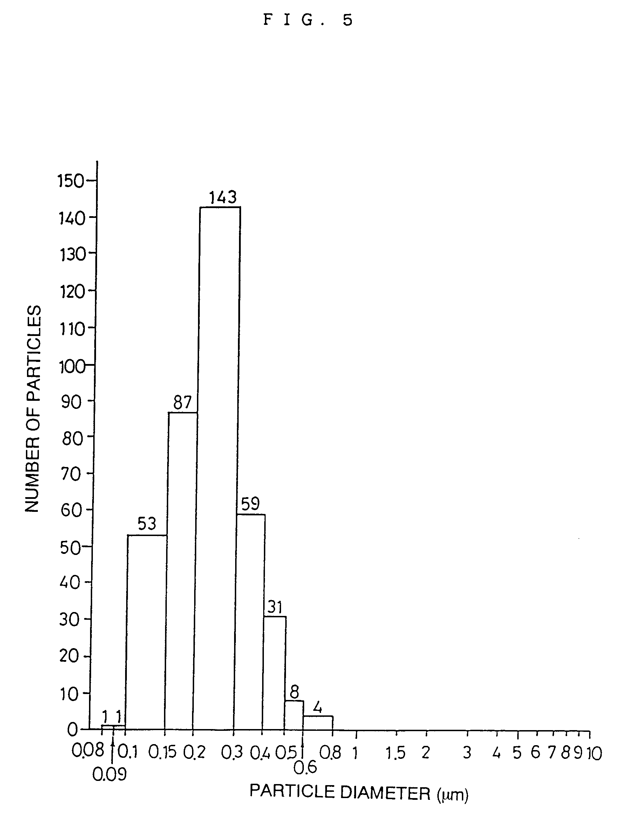

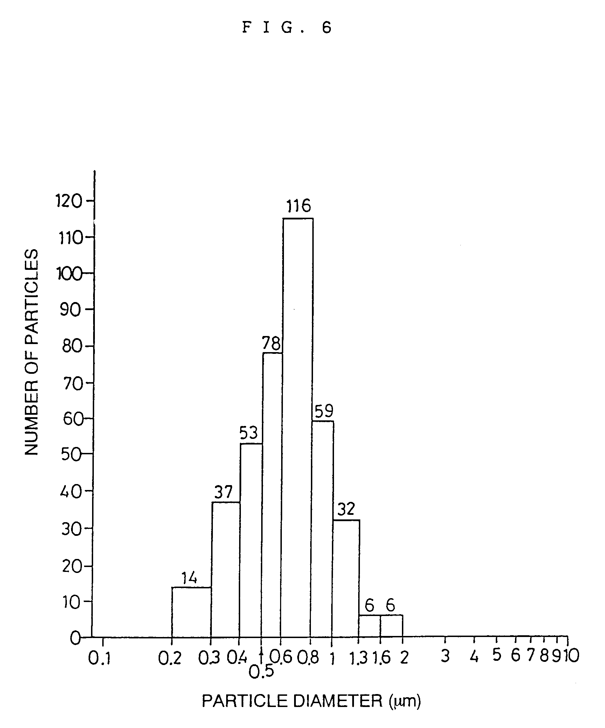

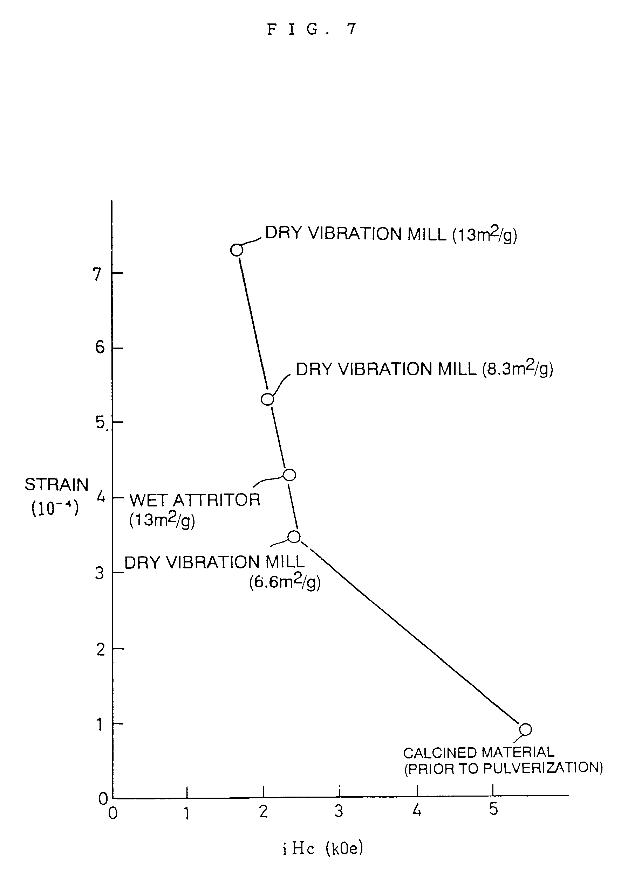

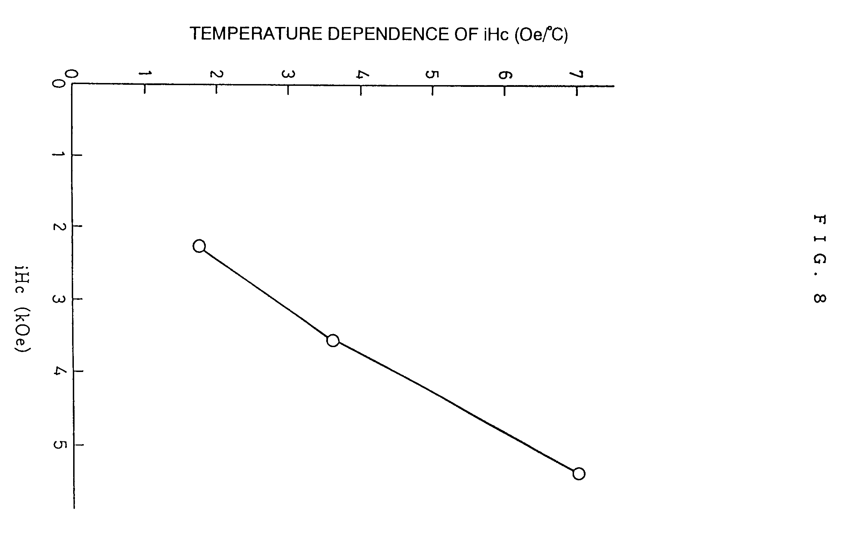

Figure 1 illustrates one of the principles of improvements in the degree of orientation according to the present invention. Figure 2 illustrates graphically changes-by-pulverization in the relation of the $\sigma$s and iHc to specific surface area of M type system ferrite powders. Figure 3 is a graph showing expected B-H curves of one ferrite particle. Figure 4 represents the pulverization processes used in Examples 1-3 and Comparative Examples 1-3. Figure 5 is a histogram showing the post-pulverization particle size distribution of the particles in Example 1. Figure 6 is a histogram showing the grain size distribution of the sintered compact obtained by sintering the compact of Example 1. Figure 7 is a graph showing the relation between strain and iHc. Figure 8 is a graph showing the relation between strain and the temperature dependence of iHc.

BEST MODE FOR CARRYING OUT THE INVENTION

In what follows, the illustrative construction of the present invention will be explained at great length.

The anisotropic ferrite magnet according to the present invention is primarily composed of hexagonal system ferrites such as a magnetoplumbite type of M and W phases. Of such ferrites, preference is given to $MO \cdot nFe_2O_3$ (n is preferably at least one member from Sr and Ba and n = 4.5 to 6.5). Such ferrites may further contain Ca, Pb, Al, Ga, Sn, Zn, In, Co, Ni, Ti, Cr, Mn, Cu, Ge, Nb, Zr, Cr and so on.

In order to produce the anisotropic magnet made up of the sintered compact of such ferrite according to the present invention, the predetermined raw materials are first mixed together, followed by calcination. In order to obtain fine ferrite particles after calcination, for instance, it is desired that in mixing, an aqueous slurry of iron oxide is first wet-pulverized and an aqueous solution of a water-soluble salt of said M is added to the powders in the presence of $Na_2CO_3$ or the like, whereby the carbonate of M is precipitated out for mixing with the fine oxide iron particles with high accuracy. Alternatively, the fine carbonate of M may be well mixed with iron oxide. After that, washing, drying and calcination are carried out. Calcination may occur, for instance, at 1000 to 1350°C for 1 second to 10 hours in the atmosphere. In order to obtain fine calcined powders of the M type Sr ferrite in particular, calcination may occur at 1000 to 1200°C for about 1 second to 3 hours.

Preferably, such calcined powders have substantially a magnetoplumbite type ferrite structure and consist of primary particles having a mean particle diameter of 0.1 to 1 $\mu$m, esp., 0.1 to 0.5 $\mu$m. The mean particle diameter may be measured with a scanning electron microscope (SEM), and these powders have preferably a coefficient of variation (CV) of 80% or less, especially 10 to 70% in general. It is also preferred that the saturation magnetization as lies at 65 to 80 emu/g, in particular, that of the M type ferrite powders lies at 65 to 71.5 emu/g and the coercive force iHc lies at 2000 to 8000 Oe, in particular, that of the M type ferrite powders lies at 4000 to 8000 Oe. Note that the particle diameters of the calcined powders are not limited to those mentioned above, as will be described later.

Then, the calcined powders are pulverized. Preferably, the bHc of the particles is reduced by introducing crystal strains in them by pulverization. So far, the magnet properties, especially, the degree of orientation, of ferrite magnets using fine ferrite particles of 0.01 to 0.1 $\mu$m obtained as by co-precipitation have been low, partly because the ferrite particles are much smaller in size than required and partly because the magnetization as is low. Therefore, the first requirement is considered to be that the mean particle diameter is regulated to the range of, for instance, 0.1 to 0.5 $\mu$m during the compaction, as mentioned above, and that the saturation magnetization $\sigma$s is made close to the theoretical value (about 71.5 emu/g in the case of the M type Sr ferrite). However, even 0.1 to 1 $\mu$m ferrite particles having a large $\sigma$s are likely to agglomerate together, because they are converted to single-domain particles so that the iHc and bHc are increased to produce magnetic forces among them. As a result, making them anisotropic by a magnetic field is interrupted. It is now found that the attraction or agglomeration forces among the ferrite particles are proportional to the square of the magnetic flux densities of their surfaces. These surface magnetic flux densities ($B_0$) are magnetic flux densities B1 and B2 on the so-called working points defined by the shapes of the particles and the geometry of the second quadrant of a BH curve, as illustrated in Fig.1. In other words, the larger the bHc of ferrite particles the higher the surface magnetic flux densities $(B_0)$ and so the larger the agglomeration forces $(B_0{}^2)$ Therefore, in order to decrease the agglomeration forces among ferrite particles, it is favorable to decrease the bHc and reduce the squareness of the second quadrant.

On the other hand, it would be easily expected that the larger the magnetic moment in a certain external magnetic field, the more favorable it is to achieve the high orientation of ferrite particles during the compaction in the magnetic field. Accordingly, in order to decrease the magnetic agglomeration forces among them and achieve the high orientation of them, the ferrite particles having uniaxial magnetic anisotropy may be soft-magnetized temporarily and apparently. Then, these soft-magnetized particles may be converted to a permanent magnet by returning to their own hard magnetism at the later step. Besides, these ferrite particles may be used as such in the form of magnetic powders for magnetic recording media.

The B-H curve of one particle depicted in Fig.1 may be obtained by prediction alone. This is because that of one particle of 1 $\mu$m or less cannot practically be measured, because some problems arise in connection with its separation and the sensitivity to its measurement. For that reason, the BH curve of one Sr ferrite particle was anticipated for each magnitude of iHc in the light of the experimental data gleaned by the pulverization of the M type Sr ferrite (Fig.3). Then, the magnetic agglomeration force $(Bo^2)$ was anticipated from the BH curve of this one ferrite particle, as set out in Table 1. This was calculated by the following procedure.

Table 1

| Anticipation of the magnetic agglomeration force of one particles | | | | |
|---|---|---|---|---|
| Magnetization Curves | A Ratio of Agglomeratio Forces | | B Ratio of Aggloweration Forces | |
| | Bo(G) | $(B0^2)$ | Bo(G) | $(Bo^2)$ |
| 1 | 3760 | 1.00 | 3360 | 1.00 |
| 2 | 3630 | 0.93 | 3240 | 0.93 |
| 3 | 2840 | 0.57 | 2440 | 0.53 |

Some literature (for instance, J.Appl.Phys., Vol. 53, No. 11, page 7867 (1982)) refers to the measurement of Ba ferrite particles of ca. 4 $\mu$m and reports that the I-H curves thereof have much improved squareness. This appears to hold for particles of 1 $\mu$m as well. Various BH curves, anticipated in consideration of these, are illustrated in Fig.3. If iHc is larger than Br, then it is expected that bHc = Br. On the other hand, if iHc is smaller than Br, then bHc = iHc. Now assume that the particle takes a columnar form. Then, when the ratios of height (L) to diameter (D) are 1 and 0.5, the permeance curves are illustrated by A and C, respectively, in Fig.3. Likewise, a spherical form presents B. At this time, the surface magnetic flux density $(B_0)$ of the particle is considerably reduced when Hc = 2.4 kOe, whatever forms it takes, as shown in Table 1. To put it another way, if the bending point of the magnetisation curve is shifted from the working point to the Y (B) axis, then there is a considerable drop of Br. The critical point lies roughly at bHc = 3 kOe in the case of the M type Sr ferrite, as determined from Fig.3. Thus, it is expected that because of bHc = iHc, the iHc of the particle is preferably reduced to 3 kOe by pulverization. (However, it is required that uniaxial anisotropy be kept intact). It is also preferable that the iHc is 0.5 kOe or more, because the final purpose of the present invention is to obtain a permanent magnet; that is, it is required that the soft-magnetized particles be again returned to hard magnetism at the later step. More preferably, the iHc of the particle during the compaction lies generally in the range of 0.5 to 3.5 kOe and that of the M type Sr ferrite particle in particular lies in the range of 1.0 to 3.0 kOe.

Effective to achieve these is to introduce strain in the particle by mechanical pulverization. In this case, it is preferred that after the pulverization, the strain in the (206) plane of the particle lies in the range of $1 \times 10^{-4}$ or more, particularly $2 \times 10^{-4}$ to $10 \times 10^{-4}$ and more particularly $3 \times 10^{-4}$ to $7 \times 10^{-4}$, as measured by X-ray diffraction.

Various procedures have been known for the quantitative determination of strains by X-ray diffraction, but it is preferable to use how to achieve the separation between crystallite size and strain with Fourier analysis by Warren and Averbach (cf. J. Appl.Phys., Vol. 20, page 595 (1950)). Of numerous diffraction planes of the hexagonal system ferrite, the strain $\langle \epsilon L^2 \rangle$ in the (206) plane matches best with the magnitude of iHc. Then, using Sr ferrite annealed at sufficiently high temperatures as the standard sample, the strain $\langle \epsilon L^2 \rangle$ in the (206) plane is calculated according to the reference literature mentioned above or other literature such as Clay Science, 18, 4, 144-151 (1978).

It is noted that as the iHc of Sr or other ferrite particles is reduced by strains caused by pulverization, another effect that the amount of changes of iHc with respect to temperature is reduced is achieved as well. The temperature coefficient of iHc is reduced to about 1 to 6 Oe/°C at -100 to +150°C. Alternatively, a coarser raw hexagonal system ferrite material may be used as well; that is, it may be reduced in size by pulverization after calcination. When such a coarser ferrite material is reduced in size by pulverization, but their own iHc is lower than about 3.5 kOe, it is not always required to reduce that iHc. However, strains are introduced in them by pulverization.

For such pulverization, for instance, it is preferred to carry out dry pulverization, thereby introducing sufficient crystal strains in the particles. For pulverizers used for dry pulverization, a dry type vibration mill, a dry type attritor (a media agitating mill), a dry type ball mill or other equipment may be used, but the most preference is given to using a dry type vibration mill.

The particles are dry-pulverized until the BET specific surface areas are increased to about 2 to 10 times as large, thereby introducing in the (206) planes crystal strains of, say, about $3 \times 10^{-4}$ to $7 \times 10^{-4}$. In this case, the dry-pulverized powders have a mean particle diameter of about 0.1 to 1 $\mu$m and a BET specific surface area of about 4 to 10 $m^2/g$ with the CV of particle diameters maintained at 80% or less, esp., 10 to 70%.

Then, the dry-pulverized powders are usually wet-pulverized. This wet pulverization enables the BET specific surface area to be increased to about 1 to 4 times as large, esp., 1 to 3 times as large, and the powders to have a mean particle diameter of 0.1 to 0.8 $\mu$m and a BET specific surface area of 6 to 12 $m^2/g$, while the CV is maintained at 80% or less, esp., 10 to 70%. Even with this wet pulverization, crystal strains are increased, and the final ferrite particles are regulated to the above-mentioned iHc in the amount of strains of $10^{-4}$ or more. It is noted that such strain amounts or Hc may be obtained by wet pulverization alone or without recourse to dry pulverization, and so the pulverization may be carried out by wet pulverization alone. It is also noted that after the completion of pulverization, the $\sigma$s lies at 50 to 75 emu/g and at about 50 to 70 emu/g in the case of the M type Sr ferrite in particular. For such wet pulverization, a ball mill, an attritor, a vibration mill or other equipment may be suitably used.

In the first aspect of the present invention, it is preferable that an organic solvent is used as the solvent for a slurry for such wet pulverization. The organic solvents used include:

hydrocarbons such as heptane, industrial gasoline, kerosene, cyclohexanone, toluene, xylene, ethylbenzene and turpentine oil;

halogenated hydrocarbons such as 1,2-dibromoethane, tetrachloroethylene, perchloroethylene, dichloropentane and monochlorobenzene;

monovalent alcohols, phenols and ethers such as methanol, ethanol, n-propyl alcohol, n-butyl alcohol, cyclohexanol, phenol and n-butyl ether;

acids and esters such as butyl acetate;

polyvalent alcohols and their ethers and esters such as ethylene glycol;

aldehydes, acetals and ketones such as acetone, methyl ethyl ketone, methyl isobutyl ketone and cyclohexanone;

nitrogenous compounds such as ethylene-diamine;

sulfur compounds such as carbon disulfide; and

paint thinners such as lacquer thinner.

These solvents may be used in admixture. In this case, such an organic solvent or solvents should preferably have a viscosity of 0.3 to 2.0 cps, esp., 0.4 to 1.5 cps at 20°C. This enables compactibility or the degree of orientation of the compact to be much considerably improved. Preferably, the organic solvent has a vapor pressure of 1 to 200 mmHg at 20°C and a boiling point of 50 to 200°C. It is also preferred that the organic solvent accounts for 10 to 90% by weight of the slurry and the ferrite particles account for 10 to 90% by weight of the slurry.

For such wet pulverization, at least one surface active agent should preferably be added to the slurry. The amount of the surface active agent added should preferably lie at 0.1 to 5.0% by weight, esp., 0.3 to 3.0% by weight with respect to the dry-pulverized raw material powders. In general, this surfactant is so amphiphatic that it can be adsorbed onto the surface of the ferrite particles of the raw powders in the slurry and solubilized in the organic solvent used in an adsorbed state. In other words, this usually includes a hydrophilic group capable of being adsorbed onto the surfaces of the ferrite particles and an affinitive (hydrophobic) group capable of dissolving in the organic solvent used. Then, it is preferred that the solubility parameter (SP value) of the surfactant used is approximate to that of the organic solvent used. It is also preferred that the surfactant be adsorbed onto the raw powders in a nearly all amount in the slurry. Such adsorption and solubilization give rise to micelle formation, which in turn enables the primary particles to be well dispersed in the slurry after wet pulverization. Then, the dispersion is wet-compacted in a magnetic field, whereby the degree of orientation is much considerably improved.

Use may be made of all surface active agents including cationic, anionic, nonionic and amphoteric surfactants, but preference is given to using a surface active agent containing at least one saturated or unsaturated fatty acid having about 4 to 30 carbon atoms or its salt, esp., carboxylic acid or its acid, for instance, stearic acid, oleic acid, zinc stearate, calcium stearate, strontium stearate, barium stearate, manganese stearate, aluminium stearate, zinc oleate, calcium oleate, strontium oleate, barium oleate, manganese oleate, aluminium oleate and ammonium oleate. Of these, the most preference is given to using the fatty acid, in particular, the calcium salt of stearic acid, because desolvation during the compaction is improved without doing damage to the degree of orientation, so that the compact cannot crack. In the case of the M type Sr ferrite, for instance, this appears to be because its compact decreases in density from 3.0 $g/m^3$ to 2.8 $g/m^3$, so that the solvent is likely to be released therefrom. In particular, it is also possible to disperse such effective elements as may possibly be added to the ferrite, such as Ca, Ba, Sr, Al, Cr, Ga, Cu, Zn, Mn, Co and Ti, around each ferrite particle with high efficiency by the addition of organic materials containing those elements (metal salts of organic surfactants such as metal salts of the fatty acids mentioned above). In addition, use may suitably be made of at least one of known sulfonic acids or their salts, sulfates or their salts, phosphates or their salts, aliphatic amine salts or their quaternary ammonium, aromatic quaternary ammonium salts, pyridinium salts, imidazolium salts, betaines, aminocarboxylic acids, imidazoline salts and naturally occurring surfactants.

If such a surface active agent is added to the slurry of the raw powders in the organic solvent for wet pulverization, then that slurry can be used as such for wet compaction. Alternatively, the surface active agent may be partly or wholly added to the calcined powders during their dry pulverization that is carried out prior to the wet compaction or by itself. In addition, the surface active agent and organic solvent may be added to the dry-pulverized powders to prepare the slurry for the wet compaction. In either case, since the surface active agent is allowed to exist in the slurry during the wet compaction in a magnetic field, the effect on improving the degree of orientation of the compact is achieved, as is the case with the present invention. It is noted that in what amounts the surface active agent is used at the respective steps may be determined such that it is finally contained in the slurry for wet compaction in the amount already mentioned.

According to another embodiment of the present invention, the wet pulverization mentioned above is carried out in another solvent, which is then substituted by the organic solvent mentioned above prior to the wet compaction. For the solvents used for wet pulverization, not only are the organic solvents mentioned above usable, but water or a mixture of water with solvents is suitably usable because of their handleability or for other reasons. At this time, the amount of the raw powders in the slurry during wet pulverization lies at about 10 to 70% by weight. However, it is understood that no improvement in the degree of orientation of the compact is achievable by adding the surface active agent to the aqueous slurry for the wet compaction, and this is the reason the solvent is substituted by the organic solvent. For solvent substitution, for instance, decantation or other procedure may be applied, while the raw powders are magnetically maintained. It is noted that this wet compaction may follow dry compaction.

When the wet pulverization is done with a solvent that is different from the slurry solvent used for the wet compaction and is preferably of an aqueous type, followed by solvent substitution, it is required that the surface active agent be present in the amount mentioned above during the final wet compaction. To this end, the surface active agent may be added at any one of the dry pulverization, wet pulverization and final slurry preparation steps. In either case, the slurry for the final wet compaction should be regulated such that it contains the organic solvent in an amount of about 5 to 30% by weight and the raw particles in an amount of 70 to 95 % by weight.

After the surfactant-containing final organic solvent slurry has been prepared in this manner, the slurry is compacted in a magnetic field, while the organic solvent is removed from it. The solvent may be forcibly removed under reduced pressure as usual, while the compaction pressure may lie at about 0.1 to 0.5 $ton/cm^2$ and the applied magnetic field may be of the order of about 5 to 15 kG. The degree of orientation, Ir/Is, of the obtained compact is 78% or more, for instance, lies at 79 to 84%. Such a high degree of orientation is achieved for the first time by using the organic solvent with the surface active agent; in other words, this is not achieved by adding the surface active agent to an aqueous slurry.

After that, the compact is heat-treated at a temperature of 100 to 500 °C in the atmosphere or nitrogen to decompose the added surface active agent sufficiently for removal. Then, this compact is sintered in the atmosphere, for instance, at a temperature of 1150 to 1250 °C, esp., 1160 to 1200 °C for about 0.5 to 3 hours, whereby various forms of anisotropic ferrite magnets according to the present invention are obtained.

SEM indicates that the obtained magnets have a mean grain diameter of about 0.5 to 0.9 $\mu$m with the CV of 80% or less, and their sintering densities lie at 95% or more, esp., 96-99%, in terms of relative density. In the case of the M type Sr ferrite in particular, its Br can be 4400 G, its iHc 4000 to 4200 Oe, its Ir/Is 96% or more, esp., 97-98%, and its Hk/iHc 90 to 95%.

According to the second aspect of the present invention, mechanical strains alone are introduced in the particles by pulverization without recourse to any surface active agent. As already mentioned, pulverization is done in wet or dry manners. For the solvent for the slurry that is preferably wet-pulverized, however, preference is given to using water or its mixture with a solvent, because they are easy to handle. For wet pulverization, the solvent accounts for about 10 to 90% by weight of the slurry, and accounts for 30 to 90% by weight of the aqueous slurry in particular. The ferrite particles account for 10 to 90% by weight of the slurry, and 10 to 70% by weight of the aqueous slurry in particular.

If such a water or aqueous slurry is wet-pulverised, then the slurry can be wet-compacted as such. As mentioned above, the calcined powders may be dry-pulverized prior to the wet compaction. Alternatively, the solvent may be added to the dry-pulverized powders to prepare a slurry for the wet compaction. In addition, the wet pulverization mentioned above may be done in another solvent different from that of the slurry for the compaction, and prior to the wet compaction, the solvent used for pulverization may then be substituted by water. The solvent substitution may be done as by decantation, while the raw powders are magnetically held. It is noted that for this wet compaction, dry pulverization may have been done in advance. In either case, the final slurry for the wet compaction should be regulated such that it contains the solvent such as water in an amount of about 5 to 30% by weight and the raw particles in an amount of 70 to 95% by weight.

It is noted that when the aqueous slurry is wet-pulverized, a dispersant is preferably added to it during the pulverization. Preferable to this end are high-molecular dispersants, and the most preference is given to one based on ammonium polycarboxylate. It is also preferred that the dispersant is added to the raw powders in an amount of 0.1 to 1% by weight.

After the surfactant-containing final organic solvent slurry has been prepared in this manner, the slurry is compacted in a magnetic field, while the organic solvent is removed from it. The solvent may be forcibly removed under reduced pressure as usual, while the compaction pressure may lie at about 0.1 to 0.5 ton/cm$^2$ and the applied magnetic field may be of the order of about 5 to 15 kG. The degree of orientation, Ir/Is, of the obtained compact is 70% or more, for instance, lies at 71 to 74%.

After that, the compact is heat-treated at a temperature of 100 to 500°C in the atmosphere or nitrogen to decompose the components in the slurry sufficiently for removal. Then, this compact is sintered in the atmosphere, for instance, at a temperature of 1150 to 1250°C, esp., 1160 to 1200°C for about 0.5 to 3 hours, whereby various forms of anisotropic ferrite magnets according to the present invention are obtained.

SEM indicates that the obtained magnets have a mean grain diameter of 1.0 $\mu$m or less, esp., about 0.5 to 0.9 $\mu$m with the CV of 80% or less, and their sintering densities lie at 96% or more, esp., 97-98%, in terms of relative density. In the case of the M type Sr ferrite in particular, its Br can be 4200 G, its iHc 4100 to 4300 Oe, its Ir/Is 93% or more, esp., 94-95%, and its Hk/iHc 90 to 96%.

## EXAMPLES

In the ensuing description, the present invention will now be explained at great length with reference to the examples.

Examples 1-3 and Comparative Examples 1-3

Set out below are the starting materials.
Iron oxide ($Fe_2O_3$ with the primary particle diameters lying between 0.1 and 0.5 $\mu$m).
Strontium chloride ($SrCl_2 6H_2O$, first-grade reagent).
Sodium carbonate ($Na_2CO_3$, guaranteed reagent).
Then, 10.0 kg of iron oxide ($Fe_2O_3$) and 1.12 kg of sodium carbonate ($Na_2CO_3$) were pulverized together with 28 liters of water by means of an attritor. Subsequently, 5 liters of an aqueous solution of 3.51 kg of strontium chloride ($SrCl_2 6H_2O$) were added dropwise into the attritor containing the slurry mentioned above, followed by a further one-hour pulverization, during which
the reaction $SrCl_2 + Na_2CO_3 \rightarrow SrCO_3\downarrow + 2NaCl$ occurred, giving rise to the precipitation of very fine strontium carbonate, which was then mixed with the iron oxide particles with high accuracy. This slurry was washed until the NaCl content was reduced to 0.5% or less, followed by dehydration, drying and granulation. The particles were then calcined at 1100°C in the air for 3 hours to obtain calcined powders.

The magnetic properties of the obtained powders were measured with a sample vibration type magnetometer (VSM). The results were that $\sigma s$ = 71 emu/g and iHc = 5.5 kOe. The observation of them under a scanning electron microscope (SEM) revealed that they have a primary particle diameter of about 0.5 $\mu$m with the CV of 20% and a BET specific surface area of 3 m$^2$/g.

The calcined powders were pulverized by the process shown in Fig.4. To this end, stearic acid was used as the surfactant and toluene as the organic solvent. More specifically, the powders were dry-pulverized by a dry vibration mill or ball mill until the specific surface areas of the ferrite powders reached 9 to 12 m$^2$/g (Examples 1 & 2 and Comparative Examples 1-3). At this time, strains were introduced in the ferrite powders by pulverization, whereby the iHc was reduced from 5.5 kOe to 2.2-2.6 kOe. When stearic acid was added to the calcined powders for pulverization by a dry vibration rod mill (Example 1 and Comparative Example 3), 2.0% by weight of stearic acid were added to the ferrite powders together with 0.6% by weight of SiO$_2$ and 1.9% by weight of CaCO$_3$. By the addition of stearic acid, the ferrite powders were substantially unlikely to be deposited onto the inner wall of the dry vibration mill or the rod, so that removal of the ferrite powders could easily be achieved.

After that, a toluene slurry (having a ferrite content of 33% by weight) was pulverized by wet ball-milling (Examples 1 & 2). Another sample was prepared by the wet ball mill pulverization of a stearic acid-containing toluene slurry (Example 3). In Fig.4, there are also illustrated the processes of Comparative Examples 1-3 in which no stearic acid was used and pulverization took place in water. It is noted that in all the processes the amount of stearic acid added was 2% by weight and this was true of the addition of SiO$_2$ and CaCO$_3$ as well. The ferrite powders of Example 1 after ball mill pulverization were observed by means of SEM, and about 200 crystal grains were measured in terms of their sizes. As illustrated in Fig.4, the results were that the mean particle diameter is 0.25 $\mu$m and the coefficient of variation is 40%. Also, the magnetic properties of the powders of Examples 1-3 and Comparative Examples 1-3 after wet ball mill pulverization were measured by VSM. The results are set out in Table 2.

Table 2

| Properties of Powders | | | |
|---|---|---|---|
| Sample Nos. | Properties of Powders After the Completion of Wet Pulverization | | |
| | $\sigma s$ (emu/g) | iHc (Oe) | BET Specific Surface Area (m$^2$/g) |
| Comp. Ex. 1 | 61.0 | 2340 | 10.7 |
| 2 | 62.0 | 2380 | 9.1 |
| 3 | 59.0 | 2220 | 12.4 |
| Example 1 | 62.0 | 2240 | 10.4 |
| 2 | | 2410 | 9.0 |
| 3 | 59.0 | 2220 | 9.3 |

Thus, the iHc of the powders after pulverization was reduced, but the strain in the (206) plane of each ferrite powder was found to be $4 \times 10^{-4}$ to $7 \times 10^{-4}$ or more by X-ray diffractometry and calculation according to Warren and Averbach's method. From this result, it is evident that the larger the strain, the lower the iHc and the cause for the iHc reduction is the strain introduced by pulverization. As a result of the iHc reduction, the temperature properties were increased as well.

The concentration of ferrite in this pulverized slurry was regulated to about 80% by weight by suction filtration. While the solvent was removed from the slurry, it was compacted in a magnetic field of about 13 kG into a columnar member of 30 mm in diameter and 15 mm in height. The degree of orientation of the columnar compact was largely improved or reached as high as 80% by the addition of stearic acid and pulverization carried out in toluene, as set out in Table 3. It is noted that no improvement in the degree of orientation is achieved, even if stearic acid is added to an aqueous slurry.

Table 3

| Degree of Orientation of Compacts (Ir/Is) | | | | | |
|---|---|---|---|---|---|
| Comp.1 | Comp. 2 | Comp 3 | Example 1 | Example 2 | Example 3 |
| 72% | 69% | 80% | 80% | 72% | 80% |

Then, the compacts of Example 1 and Comparative Example 1 were sintered in the air at 1180°C for 1 hour. It is noted that the compact of Example 1 was sintered after well degreased in the air at 100 to 400°C for stearic acid removal. The properties of the obtained sintered compacts were estimated. As illustrated in Table 4, higher magnetic properties, say, Br = 4350 G and iHc = 4310 Oe, were obtained. The compact sintered at 1180°C according to Example 1 were observed by means of SEM in terms of structure, and about 200 crystal grains were measured in terms of their sizes. As illustrated in Fig.5, the results were that the mean grain diameter was 0.67 $\mu$m and the coefficient of variation was 42%.

Table 4

| Properties of Sintered Compacts | | | | |
|---|---|---|---|---|
| Sample Nos. | Br (G) | iHc (Oe) | Ir/Is (%) | Sintering Densities (g/cm$^3$) |
| Comp.Ex.1 | 4120 | 4310 | 91.5 | 4.98 |
| Example 1 | 4350 | 4310 | 97.4 | 4.96 |

Example 4

In the process of Example 1, the amount of stearic acid added to the raw particles was varied. The results are set out in Table 5.

Table 5

| Sample | Amounts of Stearic Acid Added (% by weight) | Compacts Ir/Is(%) |
|---|---|---|
| 21 | 0 | 62 |
| 22 | 2 | 78 |
| 23 | 4 | 78 |
| 24 | 6 | 79 |

Example 5

In the process of Example 3, a compact that had been pulverized in toluene with the addition of stearic acid was well degreased at 100 to 400°C in the atmosphere and then sintered at 1170 to 1180°C for 1 hour in the atmosphere. The obtained magnetic properties are set out in Table 6.

Table 6

| Sintering Temp.(°C) | Br (G) | iHc (Oe) | Ir/Is (%) | Sintering Densities (g/cm$^3$) |
|---|---|---|---|---|
| 1170 | 4320 | 4470 | 98.4 | 4.93 |
| 1180 | 4390 | 4230 | 98.7 | 4.97 |

Example 6

In the process of Example 1 zinc stearate and calcium stearate were used in place of stearic acid, and in the process of Example 3 oleic acid was added, all in the amounts of 2% by weight with respect to the ferrite powders.

In the process of Example 1, the degrees of orientation of compacts obtained by using toluene, MEK, ethanol and acetone as the solvents were similarly estimated. The results are set out in Table 7. In all the cases, the degree of orientation as high as 79% or more was achieved.

Table 7

| Surfactant | Time of Addition | Solvent for slurry | Compacts Ir/Is(%) | Organic solvents | | |
|---|---|---|---|---|---|---|
| | | | | Vapor pressure (mmHg) | boiling Point (°C) | Viscosity (cps) 20°C |
| Zn Stearate | Dry Pulverization | Toluene | 81 | 22 | 110.6 | 0.587 |
| Ca Stearate | Dry Pulverization | Toluene | 80 | 22 | 110.6 | 0.587 |
| Oleic Acid | Wet Pulverization | Toluene | 83 | 22 | 110.6 | 0.587 |
| Stearic Acid | Dry Pulverization | Toluene | 80 | 22 | 110.6 | 0.587 |
| Stearic Acid | Dry Pulverization | MEK | 80 | 78 | 79.6 | 0.423 |
| Stearic Acid | Dry Pulverization | Etahnol | 79 | 43 | 78.3 | 1.22 |
| Stearic Acid | Dry Pulverization | Acetone | 79 | 180 | 56.5 | 0.30 |

The results shown in Table 7 make the effect of the present invention clear. It is noted that the shapes of the ferrite particles in the compacted slurry were nearly equivalent to those of Example 1. In both the cases where the surface active agent was added to the wet-pulverized powders and the particles were pulverized with a water slurry, followed by solvent substitution, similar effects were obtained.

Example 7

Set out below are the starting materials.

Iron oxide ($Fe_2O_3$ with the primary particle diameters lying between 0.1 and 0.5 $\mu$m).

Strontium chloride ($SrCl_2 6H_2O$, first-grade reagent).

Sodium carbonate ($Na_2CO_3$, guaranteed reagent).

Then, 10.0 kg of iron oxide ($Fe_2O_3$) and 1.12 kg of sodium carbonate ($Na_2CO_3$) were pulverized together with 28 liters of water by means of an attritor. Subsequently, 5 liters of an aqueous solution of 3.51 kg of strontium chloride ($SrCl_2 6H_2O$) were added dropwise into the attritor containing the slurry mentioned above, followed by a further one-hour pulverization, during which the reaction $SrCl_2 + Na_2CO_3 \rightarrow SrCO_3\downarrow + 2NaCl$ occurred, giving rise to the precipitation of very fine strontium carbonate, which was then mixed with the iron oxide particles with high accuracy. This slurry was washed until the NaCl content was reduced to 0.5% or less, followed by dehydration and drying. The particles were then calcined at 1100°C in the air for 3 hours.

The magnetic properties of the obtained powders were measured with a sample vibration type magnetometer (VSM). The results were that $\sigma s$ = 71 (emu/g) and iHc = 5.5 (kOe).

The observation of them under a scanning electron microscope (SEM) revealed that they have a primary particle diameter of about 0.5 $\mu$m with the CV of 20% and a BET specific surface area of 3 $m^2$/g.

The principles teach that the smaller the iHc of the pulverized powders, the more preferable the results. For that reason, the magnetic properties of the powders obtained under varied conditions by a different pulverization procedure were measured by VSM (Fig.2). This revealed that the iHc of the powders is likely to be decreased by dry vibration mill pulverization in particular.

To determine the cause of this iHc reduction, the X-ray diffraction of ferrite powders having varying iHc was measured, and the strains in the (206) planes were calculated by Warren and Averbach's method (Fig.7). This revealed that the larger the strains, the smaller the iHc, and so the reason for the iHc reduction believes in the strains introduced by pulverization.

As illustrated in Fig.2, two kinds of ferrite particles whose iHc's vary were prepared under varied pulverization conditions with a dry vibration rod mill. Four hundred (400) g of each type of ferrite powders, 2.40 g of $SiO_2$ and 6.00 g of $CaCO_3$ were finely pulverized together with 2.0 liters of water for 70 minutes by means of a wet attritor. The thus finely pulverized powders have such properties as set out in Table 8.

Table 8

| Sample | Conditions for dry vibration rod mill pulverization | | Properties of the completion of time pulverization | | |
|---|---|---|---|---|---|
| | Throughput (g) | Time (min) | $\sigma s$ (emu/g) | iHc (oe) | SBET ($m^2$/g) |
| 81 | 1000 | 30 | 60.9 | 2840 | 12.5 |
| 82 | 150 | 20 | 59.9 | 2330 | 13.1 |

After dehydration, the thus pulverized slurry was wet-compacted in a magnetic field of about 13 KG into a columnar member of 30 mm in diameter and 15 mm in height. Subsequently, this compact member was sintered in the air at 1180°C for 1 hour, and the properties of the resultant sintered compact were assayed. The results are set out in Table 9.

Table 9

| Samples | Br (G) | iHc (Oe) | Ir/Is (%) | Hk/iHc (%) | Sintering Densities (g/$cm^3$) |
|---|---|---|---|---|---|
| 81 | 3940 | 4280 | 89.9 | 88.0 | 4.94 |
| 82 | 4040 | 4220 | 92.6 | 91.5 | 4.92 |

As will be appreciated from this table, the degrees of orientation of ferrite particles are improved by decreasing their iHc at the stage of the formation of a magnetic field, resulting in an improvement in Br.

In the preparation of Sample 2 with a decreased iHc, 0.4% of an ammonium polycarboxylate salt type dispersant (SN Dispersant 5468 made by Sanopuko K.K.) were added to ferrite particles, while they were

16

finely pulverized by means of a wet attritor (Sample 3). Set out in Table 10 are the properties of the powders after the completion of the pulverization.

Table 10

| Properties of Powders (with the addition of dispersant) | | | | | |
|---|---|---|---|---|---|
| Sample | Conditions for dry vibration rod mill pulverization | | Properties of the completion of time pulverization | | |
| | Throughput (g) | Time (min) | $\sigma$s (emu/g) | iHc (oe) | SBET (m$^2$/g) |
| 83 | 150 | 20 | 59.9 | 2360 | 12.0 |

After that, a sintered compact was prepared as mentioned above, and its properties were assayed. The results are set out in Table 11.

Table 11

| Properties of Sintered Compact (with the addition of dispersant) | | | | | |
|---|---|---|---|---|---|
| Samples | Br (G) | iHc (Oe) | Ir/Is (%) | Hk/iHc (%) | Sintering Densities (g/cm$^3$) |
| 83 | 4180 | 4250 | 94.4 | 96.3 | 4.93 |

As will be understood from this table, further improvements were so introduced in orientation that higher properties than ever before can be obtained.

Example 8

Sr ferrite powders ($\sigma$s = 71 emu/g and iHc = 5.5 kOe) prepared as in Example 7 were pulverized by means of a dry vibration mill. Changes of the magnetic properties of the powders having a decreased iHc by pulverization strains depending upon temperature were measured in the range of -100 to +150°C by means of a vibration magnetometer (VSM). As a result, some considerable improvements were obtained in this regard, as shown in Fig. 8.

INDUSTRIAL APPLICABILITY

According to the present invention, the degrees of orientation of compacts are much considerably improved and very high magnet properties are obtained, as already mentioned. It is noted that with a water slurry, such an effect is not achievable at all, even when any surface active agent is used for wet compaction in a magnetic field.

**Claims**

1. A process for producing an anisotropic ferrite magnet by compacting a slurry containing particles of the raw material for said ferrite magnet and an organic solvent in a magnetic field while removing said organic solvent to obtain a compact and sintering said compact, wherein:
   a surface active agent is allowed to exist in said slurry, thereby improving the degree of orientation of said compact.

2. A process for producing an anisotropic ferrite magnet as recited in Claim 1, wherein said slurry is obtained by the wet pulverization of a slurry containing the starting powders of the particles of the raw material for said ferrite magnet and said organic solvent.

3. A process for an anisotropic ferrite magnet as recited in Claim 1 or 2, wherein the particles of the raw material for said ferrite magnet or their starting powders are prepared by the dry pulverization of the calcined powders.

4. A process for an anisotropic ferrite magnet as recited in any one of Claims 1-3, wherein said slurry is prepared by the wet pulverization of the starting powders of the particles of the raw material for said ferrite magnet and then the substitution of a solvent by said organic solvent.

5. A process for producing an anisotropic ferrite magnet as recited in any one of Claims 2-4, wherein said surface active agent is added to the starting powders of the particles of said ferrite magnet prior to dry or wet pulverization.

6. A process for producing an anisotropic ferrite magnet as recited in any one of Claims 2-5, wherein said slurry is obtained by the dry or wet pulverization of the starting powders of the particles of the raw material for said ferrite magnet and then the addition of said surface active agent or said surface active agent and said organic solvent.

7. A process for producing an anisotropic ferrite magnet as recited in any one of Claims 1-6, wherein the particles of the raw material for said ferrite magnet in said slurry have a mean particle diameter of 1 μm or less.

8. A process for producing an anisotropic ferrite magnet as recited in Claim 7, wherein the coefficient of variation of the particle diameters of the particles of the raw material for said ferrite magnet is 80% or less.

9. A process for producing an anisotropic ferrite magnet as recited in any one of Claims 1-8, wherein crystal strains are introduced in the particles of the raw material for said ferrite magnet with the iHc reduced to 3.5 kOe or less.

10. A process for producing an anisotropic ferrite magnet as recited in any one of Claims 1-9, which has a mean grain diameter of 1.0 μm or less with the coefficient of variation reduced to 80% or less.

11. A process for producing an anisotropic ferrite magnet as recited in any one of Claims 1-10, wherein the degree of orientation expressed in terms of the ratio of saturation magnetization to residual magnetization is 96% or more.

12. A process for producing an anisotropic ferrite magnet as recited in any one of Claims 1-11, wherein the degree of orientation of said compact is 78% or more.

13. A process for producing an anisotropic ferrite magnet as recited in any one of Claims 1-12, wherein said surface active agent contains a metal element added to ferrite.

14. A process for producing an anisotropic ferrite magnet as recited in any one of Claims 1-13, wherein said surface active agent is allowed to exist in an amount of 0.1 to 5% by weight with respect to the particles of the raw material for said ferrite magnet.

15. A process for producing an anisotropic ferrite magnet as recited in any one of Claims 1-14, wherein said surface active agent is adsorbed onto the surfaces of the particles of the raw material for said ferrite magnet in said slurry.

16. A process for producing an anisotropic ferrite magnet as recited in any one of Claims 1-15, wherein said organic solvent has a viscosity of 0.3 to 2 cps at 20°C.

17. A process for producing an anisotropic ferrite magnet as recited in any one of Claims 1-16, wherein said organic solvent has a vapor pressure of 1 to 200 mmHg at 20°C.

18. A process for producing an anisotropic ferrite magnet as recited in any one of Claims 1-17, wherein said organic solvent has a boiling point of 50 to 200°C.

19. A process for producing an anisotropic ferrite magnet as recited in any one of Claims 1-18, wherein during the wet compaction, said slurry contains 70 to 95% by weight of the particles of the raw material for said ferrite magnet.

20. A process for producing an anisotropic magnet by pulverizing the starting powders of a hexagonal system ferrite to apply mechanical stress to the hexagonal system ferrite particles so that crystal strains are introduced therein to reduce the iHc to 3.5 kOe or less, compacting the particles in a magnetic field to form a compact and sintering said compact.

21. A process for producing an anisotropic magnet as recited in Claim 20, wherein strain in the (206) plane is $1x10^{-4}$ or more, as measured by X-rays.

22. A process for producing an anisotropic ferrite magnet as recited in Claim 20 or 21, wherein said hexagonal system ferrite particles have a mean particle diameter of 1 $\mu$m or less with the coefficient of variation of the particle diameters being 80% or less.

23. A process for producing an anisotropic ferrite magnet as recited in any one of Claims 20-22, which has a mean grain diameter of 1.0 $\mu$m or less with the coefficient of variation being 80% or less.

24. A process for producing an anisotropic ferrite magnet as recited in any one of Claims 20-23, wherein the degree of orientation expressed in terms of the ratio of saturation magnetization to residual magnetization is 93% or more.

25. A process for producing an anisotropic ferrite magnet as recited in any one of Claims 20-24, wherein the degree of orientation of said compact is 70% or more.

26. A process for producing an anisotropic ferrite magnet as recited in any one of Claims 20-25, wherein said pulverization includes wet pulverization.

27. A process for producing an anisotropic ferrite magnet as recited in Claim 26, wherein said wet pulverization is carried out using an aqueous solvent and with the addition of a high-molecular dispersant, and the pulverized product is wet-compacted in a magnetic field.

28. A process for producing an anisotropic ferrite magnet as recited in Claim 27, wherein said high-molecular dispersant is of an ammonium polycarboxylate type.

29. An anisotropic ferrite magnet which has a mean grain diameter of 1.0 $\mu$m or less with the coefficient of variation being 80% or less and in which the degree of orientation expressed in terms of the ratio of saturation magnetization to residual magnetization is 96% or more.

30. A hexagonal system ferrite particle having uniaxial crystal magnetic anisotropy, wherein strain in the (206) plane is $1x10^{-4}$ or more, as measured by X-ray diffraction.

31. A hexagonal system ferrite particle as recited in Claim 30, in which crystal strain is introduced by the pulverization of the raw material.

32. A hexagonal system ferrite particle as recited in Claim 31, wherein the iHc is reduced by crystal strain.

33. A hexagonal system ferrite particle as recited in Claim 32, whose iHc is 3.5 kOe or less.

34. A hexagonal system ferrite particle as recited in any one of Claims 30-33, wherein the amount of variation of the iHc with respect to temperature is reduced by crystal strain.

35. A hexagonal system ferrite particle as recited in Claim 33 which has a mean particle diameter of 1 $\mu$m or less with the coefficient of variation of the particle diameter being 80% or less.

36. A process for producing hexagonal system ferrite particles by applying stress to the starting powder of hexagonal system ferrite to introduce therein strains of $1x10^{-4}$ more in the (206) planes, as measured by X-ray diffraction.

37. A process for producing hexagonal system ferrite particles as recited in Claim 36, wherein said mechanical stress is applied by wet and/or dry pulverization.

FIG. 1

MAGNETIC FLUX DENSITY (B)

DEMAGNETIZING FIELD (Hd)

N

S

MAGNETIC AGGLOMERATION

WORKING POINT (P)

B

B1

B2

MAGNETIC AGGLOMERATION FORCES

MAGNETIC MOMENT

H

Hex

SOFT MAGNETIZATION BY INTRODUCTION OF PULVERIZATION STRAIN

FIG. 2

EP 0 592 672 A1

F I G . 3

PREDICTED MAGNETIZATION
CURVES OF ONE PARTICLE

EP 0 592 672 A1

F I G. 4

CALCINED POWDERS

DRY BALL MILL

BALL MILL
+ WATER

BALL MILL+
TOLUENE

BALL MILL+
STEARIC ACID
+ TOLUENE

DRY VIBRATION MILL
+ STEARIC ACID

BALL MILL+
TOLUENE

BALL MILL
+ WATER

BALL MILL+
STEARIC ACID
+ TOLUENE

| COMP. EX. 1 | COMP. EX. 2 | EX. 2 | EX. 1 | COMP. EX. 3 |

EX. 3

F I G . 5

F I G .  6

F I G . 7

DRY VIBRATION MILL ($13m^2$/g)

DRY VIBRATION MILL ($8.3m^2$/g)

WET ATTRITOR
($13m^2$/g)

DRY VIBRATION MILL
($6.6m^2$/g)

CALCINED MATERIAL
(PRIOR TO PULVERIZATION)

STRAIN
($10^{-4}$)

i Hc (kOe)

F I G . 8

# INTERNATIONAL SEARCH REPORT

International Application No PCT/JP92/00902

## I. CLASSIFICATION OF SUBJECT MATTER (if several classification symbols apply, indicate all) [6]

According to International Patent Classification (IPC) or to both National Classification and IPC

Int. $Cl^5$  H01F1/11, 41/02

## II. FIELDS SEARCHED

### Minimum Documentation Searched [7]

| Classification System | Classification Symbols |
|---|---|
| IPC | H01F1/11, 41/02 |

### Documentation Searched other than Minimum Documentation to the Extent that such Documents are Included in the Fields Searched [8]

Jitsuyo Shinan Koho            1926 - 1992
Kokai Jitsuyo Shinan Koho      1971 - 1992

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 64-49206 (Nippon Zeon Co., Ltd.), February 23, 1989 (23. 02. 89), Lower left column, page 1 (Family: none) | 1-37 |
| A | JP, A, 61-247002 (Hitachi Metals, Ltd.), November 4, 1986 (04. 11. 86), Claim (Family: none) | 1-37 |
| A | JP, A, 50-120500 (Kanegafuchi Chemical Industry Co., Ltd.), September 20, 1975 (20. 09. 75), Claim & FR, A1, 2263588 & DE, A1, 2510132 & FR, B3, 2263588 | 31 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 30, 1992 (30. 09. 92) | October 20, 1992 (20. 10. 92) |

| International Searching Authority | Signature of Authorized Officer |
|---|---|
| Japanese Patent Office | |